# EUROPÄISCHE PATENTSCHRIFT

(11) **EP 4 609 683 B1**
(45) Veröffentlichungstag und Bekanntmachung des Hinweises auf die Patenterteilung: **30.09.2026**
(21) Anmeldenummer: 25160252.0
(22) Anmeldetag: 26.02.2025
(51) Int. Cl.: A01B 59/00, B60D 1/04

(54) **SCHNELLKUPPLUNGSHAKEN MIT ERLEICHTERTER BEDIENUNG**
QUICK COUPLING HOOK WITH FACILITATED OPERATION
CROCHET DE RACCORD RAPIDE À COMMANDE FACILITÉE

(30) Priorität: 02.03.2024 DE 102024106098
(43) Veröffentlichungstag der Anmeldung: 03.09.2025
(73) Patentinhaber: JOST-WERKE Deutschland GmbH, 63263 Neu-Isenburg (DE)
(72) Erfinder: Paukamainen, Hannu, 41160 Tikkakoski (FI); Mäkelä, Lasse, 40520 Jyväskylä (FI)
(74) Vertreter: Ruttensperger Lachnit Trossin Gomoll

(56) Entgegenhaltungen:
- EP-A1- 1 849 632
- WO-A1-2020/212833
- DE-C2- 2 951 070
- DE-T2- 69 700 300
- KR-A- 20120 134 733

## Beschreibung

Die vorliegende Erfindung betrifft einen Schnellkupplungshaken, insbesondere für landwirtschaftliche Fahrzeuge. Ein solcher Schnellkupplungshaken, der beispielsweise als Teil einer heb- und senkbaren traktorseitigen Dreipunktkupplung zur Ankopplung landwirtschaftlicher Arbeitsgeräte, wie etwa Pflüge, Eggen und dergleichen, verwendet wird, umfasst:
i. einen Hakenkörper mit einem Hakenmaul, wobei das Hakenmaul einen durch einen Öffnungsbereich hindurch erreichbaren Aufnahmebereich aufweist,
ii. einen Sicherungsriegel, welcher am Hakenkörper aufgenommen ist und welcher relativ zum Hakenkörper verlagerbar ist zwischen einer Sicherungsstellung und einer Freigabestellung, wobei der Sicherungsriegel in der Sicherungsstellung weiter in den Öffnungsbereich hineinragt als in der Freigabestellung,
iii. ein Betätigungsbauteil, welches am Hakenkörper aufgenommen ist und welches relativ zum Hakenkörper beweglich ist zwischen einer Betriebsstellung und einer Rüststellung, wobei der Sicherungsriegel und das Betätigungsbauteil derart zur gemeinsamen Bewegung miteinander gekoppelt sind, dass dann, wenn sich das Betätigungsbauteil in seiner Rüststellung befindet, sich der Sicherungsriegel in seiner Freigabestellung befindet, und dass dann, wenn sich das Betätigungsbauteil in seiner Betriebsstellung befindet, sich der Sicherungsriegel in seiner Sicherungsstellung befindet,
iv. eine Vorspannfeder, welche sich zwischen einem hakenkörperseitigen Federlager und einem betätigungsbauteilseitigen Federlager erstreckt und welche das Betätigungsbauteil zu seiner Betriebsstellung hin vorspannt,
v. eine erste hakenkörperseitige Anlageformation auf einer ersten Seite des Betätigungsbauteils, und
vi. eine zweite hakenkörperseitige Anlageformation auf einer der ersten Seite entgegensetzten zweiten Seite des Betätigungsbauteils.

Das Betätigungsbauteil liegt dabei in seiner Betriebsstellung an der ersten und an der zweiten hakenkörperseitigen Anlageformation an. Das Betätigungsbauteil weist eine Kraftangriffsformation auf, welche dazu ausgebildet ist, um durch Kraftangriff daran das Betätigungsbauteil ausgehend von der Betriebsstellung gegen die Wirkung der Vorspannfeder in Richtung der Rüststellung zu bewegen.

Der Schnellkupplungshaken wird in der vorliegenden Anmeldung, sofern nichts anderes ausgesagt ist, in einem Bezugszustand beschrieben, in welchem sich das Betätigungsbauteil frei von äußerer Krafteinwirkung auf den Schnellkupplungshaken in seiner Betriebsstellung befindet. Daher befinden sich die oben genannten ersten und zweiten hakenkörperseitigen Anlageformationen wenigstens im Bezugszustand auf der ersten Seite und auf der der ersten entgegengesetzten zweiten Seite des Betätigungsbauteils.

Die Beschreibung des Schnellkupplungshakens im Bezugszustand bedeutet nicht, dass die in der Beschreibung getroffenen technischen Merkmalen nur für den Bezugszustand gelten. Sie gelten jedoch wenigstens im Bezugszustand des Schnellkupplungshakens.

Ein solcher Schnellkupplungshaken der eingangs genannten Art ist aus der EP 1 849 632 A1 bekannt. Wie für Schnellkupplungshaken üblich soll der bekannte Schnellkupplungshaken gestatten, eine vorübergehende formschlüssige Verbindung mit einem Gegenkupplungsbauteil, häufig einer Gegenkupplungskugel, in möglichst kurzer Zeit herzustellen, sie sicher aufrechtzuerhalten, und sie in möglichst kurzer Zeit wieder zu lösen.

An dem bekannten Schnellkupplungshaken kann das Betätigungsbauteil in seiner Rüststellung durch einen Anlageeingriff einer Rastgegenformation des Betätigungsbauteils mit einer hakenkörperseitigen Rastformation gesichert werden. In der Rüststellung kann ein zuvor mit dem Schnellkupplungshaken gekuppeltes Gegenkupplungsbauteil durch den Öffnungsbereich des Hakenmauls hindurch aus dem Aufnahmebereich entnommen werden. In der Rüststellung des Betätigungsbauteils kann somit ein Rüsten oder Umrüsten des den Schnellkupplungshaken tragenden Fahrzeugs erfolgen.

In der Betriebsstellung des Betätigungsbauteils ist ein im Aufnahmebereich aufgenommenes Gegenkupplungsbauteil durch den Sicherungsriegel, welcher sich dann in der Sicherungsstellung befindet, gegen ein Verlassen des Aufnahmebereichs und damit gegen ein Lösen der Kupplungsverbindung gesichert. Ein den Schnellkupplungshaken tragendes Fahrzeug kann dann mit angekuppeltem Arbeitsgerät betrieben werden.

Nachteilig an dem bekannten Schnellkupplungshaken ist der komplizierte Bewegungsablauf, den eine Bedienperson manuell durch Fingerangriff an der als Ringöse ausgebildeten Kraftangriffsformation ausführen muss, um das Betätigungsbauteil sicher von seiner Betriebsstellung in seine Rüststellung zu bewegen und dort an der bezeichneten hakenkörperseitigen Rastformation zu sichern.

Die Bedienperson muss hierzu das in der Betriebsstellung im Hakenkörper aufgenommene Betätigungsbauteil translatorisch aus dem Hakenkörper herausziehen und muss das Betätigungsbauteil im herausgezogenen Zustand zum richtigen Zeitpunkt gegen die Vorspannwirkung der Vorspannfeder neigen. Ungeübte Bedienpersonen können hierfür mehrere Versuche benötigen, bis sie das Betätigungsbauteil erfolgreich in die Rüststellung verbringen, was den Sinn eines Schnellkupplungshakens konterkariert.

Aufgabe der vorliegenden Erfindung ist daher, die Bedienung des Schnellkupplungshakens zur Bewegung des Betätigungsbauteils von der Betriebsstellung in die Rüststellung zu erleichtern.

Die vorliegende Erfindung löst diese Aufgabe an dem eingangs genannten Schnellkupplungshaken dadurch, dass in dem genannten Bezugszustand eine sowohl das hakenkörperseitige Federlager als auch das betätigungsbauteilseitige Federlager durchsetzende virtuelle Verbindungsgerade einen wenigstens doppelt so großen Abstand von der ersten hakenkörperseitigen Anlageformation aufweist wie von der zweiten hakenkörperseitigen Anlageformation.

Die erste und die zweite hakenkörperseitige Anlageformation und die Anbindung des Betätigungsbauteils an die Vorspannfeder am betätigungsbauteilseitigen Federlager definieren Lage und Orientierung des Betätigungsbauteils in seiner Betriebsstellung. Ausgehend von der Betriebsstellung kann das Betätigungsbauteil nur in einer zwischen der ersten und der zweiten hakenkörperseitigen Anlageformation verlaufenden Richtung translatorisch in Richtung zur Rüststellung hin bewegt werden.

An dem vorliegend diskutierten Schnellkupplungshaken, ebenso wie an dem aus der EP 1 849 632 A1 bekannten Schnellkupplungshaken, ist das Betätigungsbauteil in einer Ausnehmung des Hakenkörpers aufgenommen, wobei das Betätigungsbauteil sich im Bezugszustand tiefer in der Ausnehmung befindet als in seiner Rüststellung.

Die virtuelle Verbindungsgerade, welche durch das hakenkörperseitige Federlager und durch das betätigungsbauteilseitige Federlager hindurchgeht, zeigt die Kraftwirkungslinie an, mit welcher die von der Vorspannfeder ausgeübte Vorspannkraft auf das Betätigungsbauteil wirkt. Dadurch, dass der Abstand der virtuellen Verbindungsgerade von der ersten hakenkörperseitigen Anlageformation wenigstens doppelt so groß ist wie der Abstand der virtuellen Verbindungsgerade von der zweiten hakenkörperseitigen Anlageformation, wird beim Entfernen des Betätigungsbauteils aus seiner Betriebsstellung durch die Vorspannfeder nicht nur eine Vorspannkraft, sondern eine außermittig auf das Betätigungsbauteil wirkende Vorspannkraft erzeugt. Diese außermittige Vorspannkraft erzeugt zusätzlich zur Vorspannwirkung ein auf das Betätigungsbauteil wirkendes Drehmoment, welches als Neigemoment eine Neigung des Betätigungsbauteils um eine quer, vorzugsweise orthogonal, zur Trajektorie der translatorischen Bewegung des Betätigungsbauteils verlaufende Neigeachse bewirkt. Für die Bedienperson reicht es daher aus, das Betätigungsbauteil gegen die Vorspannwirkung der Vorspannfeder aus der Betriebsstellung zu entfernen. Eine insbesondere für eine selbsttätige Festlegung des Betätigungsbauteils in seiner Rüststellung erwünschte Neigungsbewegung wird sich aufgrund der Anordnung der beiden Federlager der Vorspannfeder von alleine einstellen. Auch eine bisher mit dem Schnellkupplungshaken nicht konfrontierte und daher nicht vertraute Bedienperson ist somit mit größter Wahrscheinlichkeit bereits beim ersten Versuch, das Betätigungsbauteil von der Betriebsstellung in die Rüststellung zu verbringen und dort festzulegen, erfolgreich.

Die durch die Vorspannfeder erzeugte Neigewirkung am Betätigungsbauteil ist umso größer, je größer der Abstand der virtuellen Verbindungsachse von der ersten hakenkörperseitigen Anlageformation und je kleiner der Abstand der virtuellen Verbindungsachse von der zweiten hakenkörperseitigen Anlageformation ist. Daher ist bevorzugt der Abstand der virtuellen Verbindungsachse von der ersten hakenkörperseitigen Anlageformation wenigstens fünfmal so groß wie der Abstand der virtuellen Verbindungsachse von der zweiten hakenkörperseitigen Anlageformation, besonders bevorzugt wenigstens 10 mal so groß, und noch stärker bevorzugt wenigstens 15 mal so groß.

Zur Vermeidung unnötig hoher Reibung zwischen dem Betätigungsbauteil und den hakenkörperseitigen Anlageformationen, welche eine Bewegung des Betätigungsbauteils aus seiner Betriebsstellung heraus erschweren könnte, ist bevorzugt vorgesehen, dass die über die beiden Federlager hinaus verlaufend gedachte virtuelle Verbindungsgerade im Bezugszustand des Schnellkupplungshakens zwischen der ersten und der zweiten hakenkörperseitigen Anlageformation verläuft. Die virtuelle Verbindungsgerade kann eine Tangente an die zweite hakenkörperseitige Anlageformation sein, sodass in diesem Fall der Abstand zwischen der virtuellen Verbindungsgerade und der zweiten hakenkörperseitigen Anlageformation null ist. In diesem Falle gilt der Abstand der virtuellen Verbindungsgerade von der ersten hakenkörperseitigen Anlageformation als um einen unendlich großen Faktor größer als der nicht existierende Abstand der virtuellen Verbindungsgerade von der zweiten hakenkörperseitigen Anlageformation.

Die virtuelle Verbindungsgerade kann auch jenseits der zweiten hakenkörperseitigen Anlageformation verlaufen, sodass sowohl die erste als auch die zweite hakenkörperseitige Anlageformation auf derselben Seite der virtuellen Verbindungsgerade liegen. In diesem Falle wird der Betrag des Abstands der virtuellen Verbindungsgerade von der zweiten hakenkörperseitigen Anlageformation verwendet. Ein negativer Abstand soll zur Analyse des Verhältnisses der beiden Abstände nicht verwendet werden.

Zur Festlegung des Betätigungsbauteils in seiner Rüststellung ist auch am vorliegend diskutierten Schnellkupplungshaken bevorzugt vorgesehen, dass der Schnellkupplungshaken eine hakenkörperseitige Rastformation aufweist, mit welcher eine betätigungsbauteilseitige Rastgegenformation des Betätigungsbauteils in einem Rüstzustand des Schnellkupplungshakens, in welchem sich das Betätigungsbauteil in der Rüststellung befindet, in Eingriff ist, um das Betätigungsbauteil gegen die Wirkung der Vorspannfeder in der Rüststellung zu halten. Da ein im Hakenmaul aufgenommenes Gegenkupplungsbauteil im Bezugszustand des Schnellkupplungshakens im Bezugszustand gegen ein Entfernen aus dem Hakenmaul gesichert ist und der Schnellkupplungshaken so betriebsbereit ist, ist der Bezugszustand auch ein Betriebszustand des Schnellkupplungshakens.

Bevorzugt ist das Betätigungsbauteil ein flächiges Bauteil, welches in zwei zueinander orthogonalen Raumrichtungen erheblich größere, etwa wenigstens um den Faktor Drei bis Vier größere, Abmessungen aufweist als in seiner Dickenrichtung. Die Umrissgestalt des Betätigungsbauteils kann dabei komplex sein, weil das Betätigungsbauteil mehrere Funktionalitäten in sich vereint und gleichzeitig ein möglichst geringes Gewicht aufweisen soll. So ist bevorzugt die betätigungsbauteilseitige Rastgegenformation als Konturabschnitt der Umrissgestalt des Betätigungsbauteils und somit als Teil seiner Mantelfläche ausgebildet. Die Kraftangriffsformation des Betätigungsbauteils kann ebenfalls die Umrissgestalt des Betätigungsbauteils beeinflussen und wenigstens abschnittsweise Teil der Umrissgestalt sein.

Als flächiges Bauteil ist das Betätigungsbauteil bevorzugt derart am und im Hakenkörper angeordnet, dass seine Dickenrichtung orthogonal zu einer vom Hakenmaul umgebenen Querschnittsfläche des Aufnahmebereichs orientiert ist. Bevorzugt führt das Betätigungsbauteil zwischen seiner Betriebsstellung und seiner Rüststellung eine ebene Bewegung in dem Sinne aus, dass die jeweiligen Orientierungen seiner Dickenrichtung sowohl in der Betriebsstellung als auch in der Rüststellung, bevorzugt auch in allen Zwischenstellungen, zueinander parallel sind.

Bevorzugt ist die Rastformation im Bezugszustand des Schnellkupplungshakens auf derselben Seite des Betätigungsbauteils gelegen wie die erste hakenkörperseitige Anlageformation. Das Betätigungsbauteil kann dann im Betriebszustand an der ersten hakenkörperseitigen Anlageformation anliegen und kann im Rüstzustand auf derselben Seite mit seiner Rastgegenformation in Eingriff mit der hakenkörperseitigen Rastformation sein.

Zur Vermeidung einer unnötig hohen Anzahl an Bauteilen zur Bildung des Schnellkupplungshakens ist bevorzugt die hakenkörperseitige Rastformation auch die erste hakenkörperseitige Anlageformation. In einer bevorzugten Weiterbildung der vorliegenden Erfindung ist die hakenkörperseitige Rastformation und damit besonders bevorzugt auch die erste hakenkörperseitige Anlageformation ein Stift, beispielsweise ein zylindrischer oder polyedrischer Stift, welcher besonders bevorzugt eine Ausnehmung im Hakenkörper durchsetzt, in welcher das Betätigungsbauteil wenigstens in seiner Rüststellung aufgenommen ist. Bevorzugt verläuft der als Rastformation ausgebildete Stift parallel zur Dickenrichtung des Betätigungsbauteils am Hakenkörper. Weiter bevorzugt ist die Rastformation ein bezüglich einer zur Dickenrichtung des Betätigungsbauteils parallelen Rotationssymmetrieachse rotationssymmetrisches Bauteil, wie etwa ein Zylinderstift, sodass es bei seiner Montage nicht auf seine Orientierung ankommt.

Alternativ kann die hakenkörperseitige Rastformation oder/und die erste hakenkörperseitige Anlageformation einstückig mit dem Hakenkörper als eine Körperformation desselben ausgebildet sein.

Bevorzugt ist der Eingriff der betätigungsbauteilseitigen Rastgegenformation mit der hakenkörperseitigen Rastformation ein einfach herzustellender Anlageeingriff, in welchem bevorzugt ein Außenflächenabschnitt einer Mantelfläche des Betätigungsbauteils als die betätigungsbauteilseitige Rastgegenformation an einer Mantelfläche der Rastformation anliegt. Die Rastgegenformation kann für einen stabilen Anlageeingriff ein abschnittsweises Negativ-Abbild zur Rastformation sein. Beispielsweise kann dann, wenn die Rastformation durch einen Zylinderstift gebildet ist, die Rastgegenformation eine negativ-teilzylindrische Fläche aufweisen, welche im Eingriff mit der Rastformation diese längs eines Umschlingungswinkels von wenigstens etwa 45°, bevorzugt wenigstens etwa 60°, besonders bevorzugt wenigstens etwa 80°, umgibt. In diesem Fall kann das Betätigungsbauteil mit der Rastformation als einer Schwenkachse um die Rastformation herum verschwenkt werden, ohne den Anlageeingriff der Rastgegenformation mit der Rastformation lösen zu müssen oder tatsächlich unerwünscht zu lösen.

Um das Betätigungsbauteil dann, wenn sich in dem Rüstzustand des Schnellkupplungshakens die betätigungsbauteilseitige Rastgegenformation in einem Anlageeingriff mit der hakenkörperseitigen Rastformation befindet, trotz lediglich eines Anlageeingriffs sicher in seiner Rüststellung halten zu können, weist das Betätigungsbauteil bevorzugt eine mit Abstand von der Rastgegenformation gelegene Rüst-Anlagegegenformation auf, welche im Rüstzustand an einer hakenkörperseitigen Rüst-Anlageformation anliegt. Um die alleine durch Anlageeingriffe zwischen Formationen des Betätigungsbauteils einerseits und des Hakenkörpers andererseits definierte Rüststellung des Betätigungsbauteils sichern zu können, verläuft die virtuelle Verbindungsgerade im Rüstzustand zur Einleitung eines Neigemoments in das Betätigungsbauteil, welches das Betätigungsbauteil ohne Aufhebung des Anlageeingriffs mit der Rastformation um die Rastformation in einen Anlageeingriff mit der hakenkörperseitigen Rüst-Anlageformation drängt, mit Abstand von der Rastformation.

Bevorzugt beträgt in dem Rüstzustand der Abstand der virtuellen Verbindungsgerade von der hakenkörperseitigen Rüst-Anlageformation höchstens das Doppelte des Abstands der virtuellen Verbindungsgerade von der hakenkörperseitigen Rastformation. Besonders bevorzugt beträgt in dem Rüstzustand der Abstand der virtuellen Verbindungsgerade von der hakenkörperseitigen Rüst-Anlageformation nicht mehr als das 1,25-Fache des Abstands der virtuellen Verbindungsgerade von der hakenkörperseitigen Rastformation.

Insbesondere dann, aber nicht nur dann, wenn der Anlageeingriff der betätigungsbauteilseitigen Rastgegenformation mit der hakenkörperseitigen Rastformation ein Verschwenken des Betätigungsbauteils um die Rastformation unter Beibehaltung des Anlageeingriffs erlaubt, ist im Rüstzustand der Abstand der virtuellen Verbindungsgerade von der hakenkörperseitigen Rüst-Anlageformation bevorzugt kleiner als der Abstand der virtuellen Verbindungsgerade von der hakenkörperseitigen Rastformation, da dann der Abstand des betätigungsbauteilseitigen Federlagers von der betätigungsbauteilseitigen Rastgegenformation bzw. der hakenkörperseitigen Rastformation einen Lastarm begründet, von dessen Länge bei vorgegebener Vorspannkraft der Vorspannfeder das von der Vorspannfeder in das Betätigungsbauteil eingeleitete, um die Rastformation wirkende Neigemoment abhängt.

So kann das Betätigungsbauteil in seiner Rüststellung auch dann sicher am Hakenkörper festgelegt sein, wenn die hakenkörperseitige Rüst-Anlageformation parallel zur virtuellen Verbindungsgerade und damit parallel zur Wirkungsrichtung der Vorspannkraft der Vorspannfeder oder nur mit geringer Neigung zu dieser ausgebildet ist, sodass sie nur in vernachlässigbarer Weise unmittelbar eine Vorspannkraft der Vorspannfeder abstützen kann. Eine aus dem eingeleiteten Neigemoment um die Rastformation resultierende Anlagekraft kann die hakenkörperseitige Rüst-Anlageformation unabhängig von ihrer Orientierung relativ zur Vorspannkraft dagegen stets abstützen.

In einer bevorzugten konkreten Ausführungsform ist im Bezugszustand die erste hakenkörperseitige Anlageformation auf der vom Hakenmaul abgewandten Seite des Betätigungsbauteils gelegen und ist die zweite hakenkörperseitige Anlageformation auf der dem Hakenmaul zugewandten Seite des Betätigungsbauteils gelegen.

Bevorzugt wirkt die Vorspannkraft der Vorspannfeder möglichst parallel zur Bewegungsrichtung des Betätigungsbauteils, sodass ein möglichst großer Anteil der Vorspannkraft auch tatsächlich in die gewünschte Richtung wirkt, nämlich zur Betriebsstellung hin. Weiter bevorzugt wird das Betätigungsbauteil zwischen seiner Betriebsstellung und seiner Rüststellung möglichst parallel zu einer Maulmittelebene bewegt, welche orthogonal zu einer vom Hakenmaul umgebenen Querschnittsfläche des Aufnahmebereichs orientiert ist, und mittig sowohl durch den Öffnungsbereich als auch durch den Aufnahmebereich hindurch verläuft. Bevorzugt teilt die Maulmittelebene die vom Hakenmaul umgebene Querschnittsfläche des Aufnahmebereichs in zwei gleichgroße Flächenteile. Dem Hakenmaul ist von Fachleuten die Maulmittelebene ohne weiteres anzusehen. Längs einer in der Maulmittelebene gelegenen Einführtrajektorie kann außerdem ein mit dem Schnellkupplungshaken zu kuppelndes Gegenkupplungsbauteil in den Aufnahmebereich des Hakenmauls verbracht werden. Aus den oben genannten Gründen ist daher bevorzugt vorgesehen, dass die virtuelle Verbindungsgerade im Bezugszustand oder/und im Rüstzustand, besonders bevorzugt auch in einer beliebigen Zwischenstellung des Betätigungsbauteils, mit der Maulmittelebene oder/und mit einer virtuellen Einführtrajektorie eines mit dem Schnellkupplungshaken zu kuppelnden Gegenkupplungsbauteils in den Aufnahmebereich hinein einen Winkel von nicht mehr als 15° einschließt.

Ebenso kommt es für die Ergonomie einer Betätigung des Betätigungsbauteils auf die Anordnung des hier diskutierten Schnellkupplungshakens und auf dessen Orientierung im montierten Zustand an dem ihn tragenden Fahrzeug an. Bevorzugt weist der Hakenkörper eine, in der Regel standardisierte, Anschlussfläche zum Anschluss an einen fahrzeugseitigen Träger auf. Besonders bevorzugt ist diese Anschlussfläche eine Anschlussebene oder eine wenigstens in einer Richtung ungekrümmte Fläche. In der Regel wird der Schnellkupplungshaken mittels der Anschlussfläche an einen Träger eines landwirtschaftlichen Fahrzeugs angeschweißt. Da vorliegend jedoch der Schnellkupplungshaken an sich und ohne Orientierung relativ zu dem ihn tragenden Fahrzeug diskutiert wird, bietet die Anschlussfläche den bestmöglichen Anhalt, die Bewegungstrajektorie des Betätigungsbauteils später in einem an ein Fahrzeug montierten Zustand zu beurteilen. Bevorzugt schließt die virtuelle Verbindungsgerade im Bezugszustand oder/und im Rüstzustand, besonders bevorzugt auch in einer beliebigen Zwischenstellung des Betätigungsbauteils, mit der Anschlussfläche einen Winkel von nicht mehr als 10° ein. Weiter bevorzugt schließt die Anschlussfläche mit der zuvor diskutierten Maulmittelebene oder/und mit der zuvor diskutierten Einführtrajektorie eines Gegenkupplungsbauteils in den Aufnahmebereich des Hakenmauls hinein einen Winkel von nicht mehr als 10° ein.

Um das Betätigungsbauteil möglichst sicher und störungsfrei wenigstens von seiner Betriebsstellung in seine Rüststellung bewegen zu können, vorzugsweise jedoch auch in die entgegengesetzte Richtung, weist das Betätigungsbauteil gemäß einer Weiterbildung der vorliegenden Erfindung eine Gleitfläche auf, welche von einer betätigungsbauteilseitigen ersten Anlagegegenformation, mit welcher das Betätigungsbauteil im Bezugszustand an der ersten hakenkörperseitigen Anlageformation anliegt, bis zur betätigungsbauteilseitigen Rastgegenformation verläuft. Bevorzugt kann das Betätigungsbauteil während seiner Bewegung von der Betriebsstellung in die Rüststellung mit seiner Gleitfläche entlang einer Außenfläche der Rastformation gleiten und so einer das Betätigungsbauteil manuell bewegenden Bedienperson gemeinsam mit der Rastformation als Bewegungsführung, etwa in der Art einer Nocken- oder Kulissenführung, dienen.

Grundsätzlich kann der Sicherungsriegel beliebig kinematisch mit dem Betätigungsbauteil gekoppelt sein. Einfach und sicher ist der Sicherungsriegel in einer bevorzugten Ausführungsform des vorliegend diskutierten Schnellkupplungshakens um eine virtuelle Anlenkachse schwenkbar am Betätigungsbauteil angelenkt. Bevorzugt verläuft die Anlenkachse in Dickenrichtung des Betätigungsbauteils und somit bevorzugt auch in der Richtung, in welcher die Rastformation den Aufnahmeraum des Hakenkörpers durchsetzt, in dem das Betätigungsbauteil wenigstens in seiner Betriebsstellung aufgenommen ist.

Für eine stabile Lage und Orientierung des Betätigungsbauteils in seiner Rüststellung ist bevorzugt im Rüstzustand des Schnellkupplungshakens die virtuelle Anlenkachse bezüglich einer die virtuelle Verbindungsgerade enthaltenden und orthogonal zu einer vom Hakenmaul umgebenen Querschnittsfläche des Aufnahmebereichs orientierten Bezugsebene auf derselben Seite gelegen wie die Rastformation. Der Sicherungsriegel kann gerade unmittelbar vor Erreichen der Rüststellung aufgrund von Anlageeingriffen des Sicherungsriegels mit dem Hakenkörper und dadurch bewirkter Reibung nur erschwert relativ zum Hakenkörper bewegbar sein. Die durch den Sicherungsriegel gleichsam räumlich fixierte virtuelle Anlenkachse kann dann Neigeachse für das Betätigungsbauteil beim Erreichen des Anlageeingriffs der betätigungsbauteilseitigen Rastgegenformation mit der hakenkörperseitigen Rastformation sein. Die Lage von Rastgegenformation und Anlenkachse im Rüstzustand auf derselben Seite der virtuellen Verbindungsachse ist dann für den Bewegungsablauf zur Erreichung des genannten Anlageeingriffs von Rastformation und Rastgegenformation vorteilhaft.

Grundsätzlich ist die Kraftangriffsformation bevorzugt für eine manuelle Betätigung bzw. Bewegung des Betätigungsbauteils vorgesehen. Hierzu kann die Kraftangriffsformation eine Hintergriffsformation für einen manuellen Fingerangriff oder Handangriff umfassen. Eine solche Hintergriffsformation kann ein Bügel oder eine Ringöse oder eine Durchgriffsöffnung im Betätigungsbauteil sein. Im Falle einer Ringöse oder einer Durchgriffsöffnung ist diese bevorzugt in Dickenrichtung des Betätigungsbauteils durchgreifbar. Als manueller Kraftangriff kann alternativ eine Stange oder ein Handgriff dienen, welche bzw. welcher vom Betätigungsbauteil auskragt und durch einen Bediener umgreifbar ist.

Zusätzlich oder alternativ kann die Kraftangriffsformation eine Kopplungsformation des Betätigungsbauteils zur Kopplung mit einem Ausgabeglied eines Aktuators umfassen bzw. sein. Dann, wenn das Betätigungsbauteil durch einen Aktuator wenigstens von der Betriebsstellung in die Rüststellung bewegt werden soll kann die Kraftangriffsformation eine beliebige Kopplungsformation zur Kopplung des Ausgabeglieds des Aktuators mit dem Betätigungsbauteil sein, etwa ein Teil eines Kugelgelenks, wie etwa eine Kugelpfanne, oder dergleichen.

Eine vorteilhafte Neigewirkung im Zusammenspiel der Vorspannfeder mit einer auf das Betätigungsbauteil in Richtung von seiner Betriebsstellung weg ausgeübten Betätigungskraft kann dadurch erzielt werden, dass ein Großteil des Betätigungsbauteils im Bezugszustand auf der gleichen Seite der virtuellen Verbindungsgerade gelegen ist, auf welcher auch die Rastformation oder/und die erste hakenkörperseitige Anlageformation gelegen ist. Da das Betätigungsbauteil ein dreidimensionaler körperlicher Gegenstand ist, während die virtuelle Verbindungsgerade eine lineare Gestalt ist, ist die Anordnung eines Großteils des Betätigungsbauteils auf einer Seite der virtuellen Verbindungsgerade einfacher ausgedrückt durch eine die virtuelle Verbindungsgerade enthaltende Bezugsebene, welche im Gegensatz zur Verbindungsgerade das gesamte Betätigungsbauteil virtuell zu schneiden vermag. Daher ist bevorzugt vorgesehen, dass im Bezugszustand wenigstens 75 % des Betätigungsbauteils bezüglich einer die virtuelle Verbindungsgerade enthaltenden und orthogonal zu einer vom Hakenmaul umgebenen Querschnittsfläche des Aufnahmebereichs orientierten Bezugsebene auf derselben Seite gelegen sind wie die Rastformation oder/und die erste hakenkörperseitige Anlageformation. Insbesondere die Kraftangriffsformation des Betätigungsbauteils liegt zu wenigstens 75 %, vorzugsweise zu wenigstens 85 %, auf dieser Seite der Bezugsebene, um bei Kraftangriff an der Kraftangriffsformation ein erwünschtes Neigemoment am Betätigungsbauteil zu bewirken.

Wie oben bereits angedeutet wurde, kann der Schnellkupplungshaken einen Aktuator aufweisen, um das Betätigungsbauteil von der Betriebsstellung in die Rüststellung zu bewegen. Der Aktuator kann ein elektromechanischer, elektromagnetischer, pneumatischer oder hydraulischer Aktuator sein.

Die vorliegende Erfindung wird nachfolgend anhand der beiliegenden Zeichnungen näher erläutert werden. Es stellt dar:
- Fig. 1: eine schematische Seitenansicht einer erfindungsgemäßen Ausführungsform des Schnellkupplungshakens der vorliegenden Anmeldung im Bezugszustand ohne seitliche Abdeckung, um die im Hakenkörper aufgenommenen Bauteile des Schnellkupplungshakens zu zeigen,
- Fig. 2: eine schematische Seitenansicht wie in Figur 1, jedoch mit aus der Betriebsstellung wegbewegtem Betätigungsbauteil,
- Fig. 3: eine schematische Seitenansicht wie in den Figuren 1 und 2 mit noch weiter ausgezogenem Betätigungsbauteil, wobei das Betätigungsbauteil kurz vor dem Erreichen seiner Rüststellung steht, und
- Fig. 4: eine schematische Seitenansicht wie in den Figuren 1 bis 3 mit dem Betätigungsbauteil in der Rüststellung bzw. dem Schnellkupplungshaken im Rüstzustand.

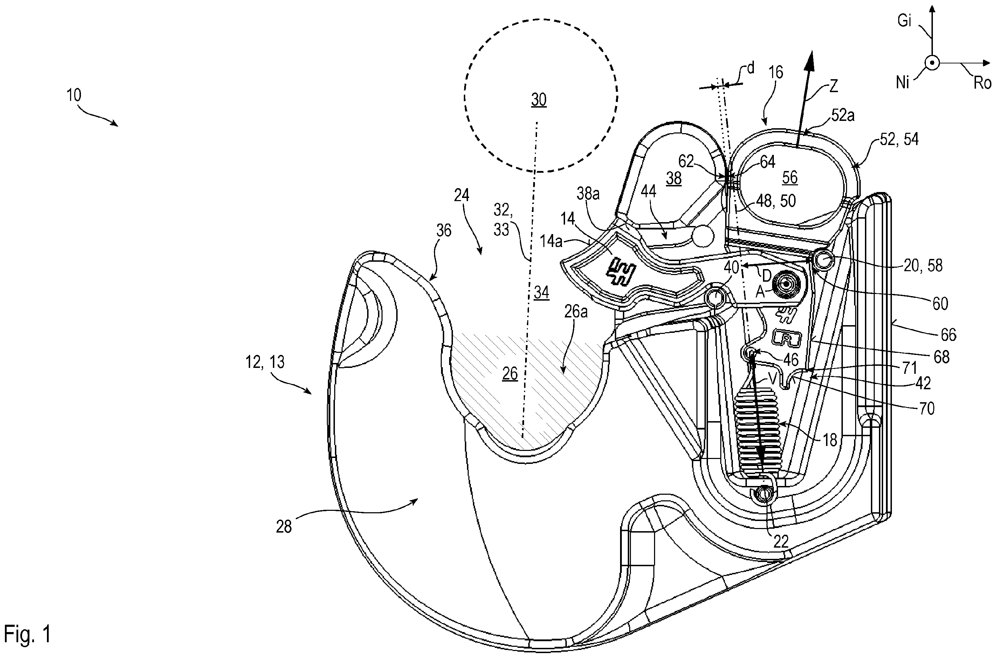

In Figur 1 ist eine erfindungsgemäße Ausführungsform eines Schnellkupplungshakens allgemein mit 10 bezeichnet. Der Schnellkupplungshaken 10 von Figur 1 ist nicht vollständig dargestellt, denn eine dem Betrachter von Figur 1 zugewandte Abdeckung als Teil des Hakenkörpers 12 ist weggelassen, um die im Inneren des Hakenkörpers 12 aufgenommenen Bauteile: Sicherungsriegel 14, Betätigungsbauteil 16, Vorspannfeder 18, Rastformation 20 und hakenkörperseitiges Federlager 22, darstellen zu können. Vom Hakenkörper 12 ist daher in den Figuren 1 bis 4 nur ein Teilkörper 13 dargestellt, welcher jedoch den größten Teil des Hakenkörpers 12 bildet.

Ein kartesisches Dreibein in der rechten oberen Ecke der Figuren 1 bis 4 gibt zur besseren Orientierung die Fahrzeugachsen eines in den Figuren nicht dargestellten, den Schnellkupplungshaken 10 tragenden Fahrzeugs an. Die Fahrzeugachsen sind die Rollachse Ro, die Nickachse Ni und die Gierachse Gi. Der Pfeil der Rollachse Ro zeigt in Vorwärtsfahrtrichtung des Fahrzeugs. Der Schnellkupplungshaken 10 kragt also im dargestellten Ausführungsbeispiel vom Heck bzw. von einem Träger am Heck eines landwirtschaftlichen Fahrzeugs in Rückwärtsfahrtrichtung ab.

Der Hakenkörper 12 bzw. sein in den Figuren 1 bis 4 dargestellter Teilkörper 13 weist als zentrale Kupplungsformation ein Hakenmaul 24 auf, dessen Aufnahmebereich 26 von einem hakenförmig gekrümmten Hakenabschnitt 28 von drei Seiten umgeben ist. Der Aufnahmebereich 26 ist für ein in Figur 1 nur grobschematisch dargestelltes Gegenkupplungsbauteil 30, etwa ein Kugelabschnitt einer Gegenkupplungsformation, längs einer durch die Gestalt des Hakenmauls bestimmten Einführtrajektorie 32 durch einen Öffnungsbereich 34 hindurch erreichbar. Die Einführtrajektorie 32 liegt in den Figuren 1 bis 4 in einer zur jeweiligen Zeichenebene der Figuren 1 bis 4 orthogonalen Maulmittelebene 33, welche orthogonal zu einer vom Hakenmaul 24 umgebenen Querschnittsfläche 26a des Aufnahmebereichs 26 orientiert ist und mittig sowohl durch den Öffnungsbereich 34 als auch durch den Aufnahmebereich 26 hindurch verläuft. Die vom Hakenmaul 24 bzw. vom Hakenabschnitt 28 von drei Seiten umgebene Querschnittsfläche 26a des Aufnahmebereichs 26 ist in Figur 1 schraffiert dargestellt.

Eine Einführschräge 36 am Hakenabschnitt 28 im Öffnungsbereich 34 erleichtert das Einführen des Gegenkupplungsbauteils 30 in den Aufnahmebereich 26.

Der Sicherungsriegel 14 befindet sich in Figur 1 in seiner Sicherungsstellung, in welcher er maximal in den Öffnungsbereich 34 einragt und ein Entweichen eines im Aufnahmebereich 26 aufgenommenen Gegenkupplungsbauteils 30 längs der Einführtrajektorie 32, jedoch in entgegengesetzter Richtung, bzw. längs der Maulmittelebene 33 durch den Öffnungsbereich 34 hindurch verhindert. Durch das Einragen des Sicherungsriegels 14 in den Öffnungsbereich 34 wird die lichte Weite des Öffnungsbereichs 34 soweit verringert, dass das Gegenkupplungsbauteil 30 nicht durch den verbliebenen Spalt zwischen der Einführschräge 36 und dem Sicherungsriegel 14 hindurchpasst. Eine Anlage des Sicherungsriegels 14 in seiner Sicherungsstellung an einer Sicherungsfläche 38a eines über dem Sicherungsriegel 14 in seiner Sicherungsstellung gelegenen Hakenkörperabschnitts 38 verhindert, dass ein im Aufnahmebereich 26 aufgenommenes Gegenkupplungsbauteil 30 den Sicherungsriegel 14 aus seiner Sicherungsstellung verlagert.

**In** entgegengesetzter Richtung vermag jedoch ein Gegenkupplungsbauteil 30 trotz eines in seiner Sicherungsstellung angeordneten Sicherungsriegels 14 in den Aufnahmebereich 26 zu gelangen, da das Gegenkupplungsbauteil 30 bei entgegengesetzter Bewegung von außen in den Aufnahmebereich 26 hinein den Sicherungsriegel 14 aus seiner Sicherungsstellung verdrängen kann.

Der Sicherungsriegel 14 ist um eine zur Zeichenebene der Figur 1 orthogonale Anlenkachse A schwenkbar am Betätigungsbauteil 16 angelenkt.

Lediglich der Vollständigkeit halber sei erwähnt, dass ein von außen, d. h. im Falle der Figur 1 von oben, längs der Maulmittelebene 33 bzw. längs der Einführtrajektorie 32 in den Aufnahmebereich 26 bewegtes Gegenkupplungsbauteil 30 auf eine konkave Kontaktfläche 14a des Sicherungsriegels 14 trifft. Der Sicherungsriegel 14, welcher in seiner Sicherungsstellung auf einer zylindrischen Kippformation 40 im Hakenkörper 12 aufliegt, kann unter der Belastung durch das in das Hakenmaul 24 bewegte Gegenkupplungsbauteil 30 um die Kippformation 40, d. h. um eine zur Anlenkachse A parallele Kippachse kippen. Hierdurch wird das in den Öffnungsbereich 34 einragende Längsende des Sicherungsriegels 14 nach unten gedrückt und das am Betätigungsbauteil 16 angelenkte Längsende entsprechend nach oben verlagert. Mit der so bewirkten Ausschubbewegung des Betätigungsbauteils 16 aus der es in der in Figur 1 gezeigten Betriebsstellung aufnehmenden Ausnehmung 42 im Hakenkörper 12 kann der Sicherungsriegel 14 vom Gegenkupplungsbauteil 30 in den in Figur 1 nach oben vom Hakenkörperabschnitt 38 und nach unten vom Hakenabschnitt 28 begrenzten Kanal 44 hinein gedrängt werden, wodurch der Öffnungsbereich 34 für das Gegenkupplungsbauteil 30 durchgängig wird.

Die Vorspannfeder 18, welche in an sich üblicher Weise eine Zugfeder ist, ist an ihrem hakenkörperfernen Ende an einem betätigungsbauteilseitigen Federlager 46, etwa einer das Betätigungsbauteil 16 in Dickenrichtung, das ist im dargestellten Ausführungsbeispiel orthogonal zur Zeichenebene der Figur 1, durchsetzenden Befestigungsöse eingehängt. Durch Wahl des Ortes des hakenkörperseitigen Federlagers 22 am Hakenkörper 12 einerseits und des Ortes des betätigungsbauteilseitigen Federlagers 46 am Betätigungsbauteil 16 andererseits kann konstruktiv die von der Vorspannfeder 18 auf das Betätigungsbauteil 16 wirkende Vorspannkraft in ihrer Wirkungsrichtung festgelegt werden. Durch die Wahl der Vorspannfeder 18 wird die Vorspannkraft betragsmäßig abhängig von ihrer Auslenkung festgelegt.

Eine virtuelle Verbindungsgerade 48, welche die beiden Federlager 22 und 46 miteinander verbindet und von welcher in Figur 1 lediglich ein Ausschnitt gezeigt ist, zeigt die Wirkungsrichtung der von der Vorspannfeder 18 auf das Betätigungsbauteil ausgeübten Vorspannkraft V an. Der Pfeil der Vorspannkraft V soll die Vorspannkraft in Figur 1 lediglich qualitativ andeuten. Die virtuelle Verbindungsgerade 48 verläuft im dargestellten Ausführungsbeispiel parallel zur Zeichenebene der Figur 1 oder wenigstens in einer zur Zeichenebene der Figur 1 orthogonalen Ebene 50. Die Querschnittsfläche 26a des Aufnahmebereichs 26 ist ebenfalls parallel zur Zeichenebene von Figur 1 orientiert. Zu ihr ist die oben genannte Ebene 50 daher ebenfalls orthogonal.

Die Vorspannfeder 18 spannt das Betätigungsbauteil 16 in seine in Figur 1 gezeigte Betriebsstellung. Die Vorspannfeder 18 spannt damit auch den Sicherungsriegel 14 in seine in Figur 1 gezeigte Sicherungsstellung vor. Figur 1 zeigt daher den Schnellkupplungshaken 10 in dem in der Beschreibungseinleitung genannten Bezugszustand.

Vorliegend ist jedoch weniger die Verlagerung des Betätigungsbauteils 16 durch den Sicherungsriegel 14 als vielmehr umgekehrt die Verlagerung des Sicherungsriegels 14 durch eine manuelle Betätigung des Betätigungsbauteils 16 von Interesse.

An seinem oberen, aus der Ausnehmung 42 herausragenden Längsende weist das Betätigungsbauteil 16 eine Ringöse 52 als Kraftangriffsformation 54 auf. Die von der Ringöse 52 umgebene Durchgriffsfläche 56 ist ebenfalls parallel zur Zeichenebene der Figur 1 orientiert. Die Ringöse 52 ist dazu geeignet und bestimmt, von einem oder zwei Fingern einer Bedienperson hintergriffen zu werden, um dann mit den durchgreifenden Fingern eine lediglich qualitativ angedeutete Zugkraft Z auf das Betätigungsbauteil 16 auszuüben und das Betätigungsbauteil 16 aus seiner in Figur 1 dargestellten Betriebsstellung zu entfernen.

Das Betätigungsbauteil 16 liegt auf seiner vom Hakenmaul 24 fernliegenden Seite an der Rastformation 20 an, welche auch eine erste hakenkörperseitige Anlageformation 58 im Sinne der Beschreibungseinleitung ist. Eine konkav gekrümmte, vorzugsweise negativ-teilzylindrische, erste Anlagegegenformation 60 schmiegt sich in der Anlagesituation an die konvex gekrümmte, vorzugsweise teilzylindrische oder zylindrische, Anlagefläche der ersten hakenkörperseitigen Anlageformation 58, bzw. der Rastformation 20 an.

Auf der dem Hakenmaul 24 zugewandten Seite des Betätigungsbauteils 16 liegt dieses mit einer im Bereich seiner Ringöse ausgebildeten zweiten Anlagegegenformation 62 an einer am Hakenkörperabschnitt 38 ausgebildeten zweiten hakenkörperseitigen Anlageformation 64 an. Durch diese Anlageeingriffe sowie durch die Vorspannkraft der Vorspannfeder 18 ist das Betätigungsbauteil 16 in seiner Betriebsstellung ausreichend definiert und bewegt sich ohne äußeren Einfluss nicht.

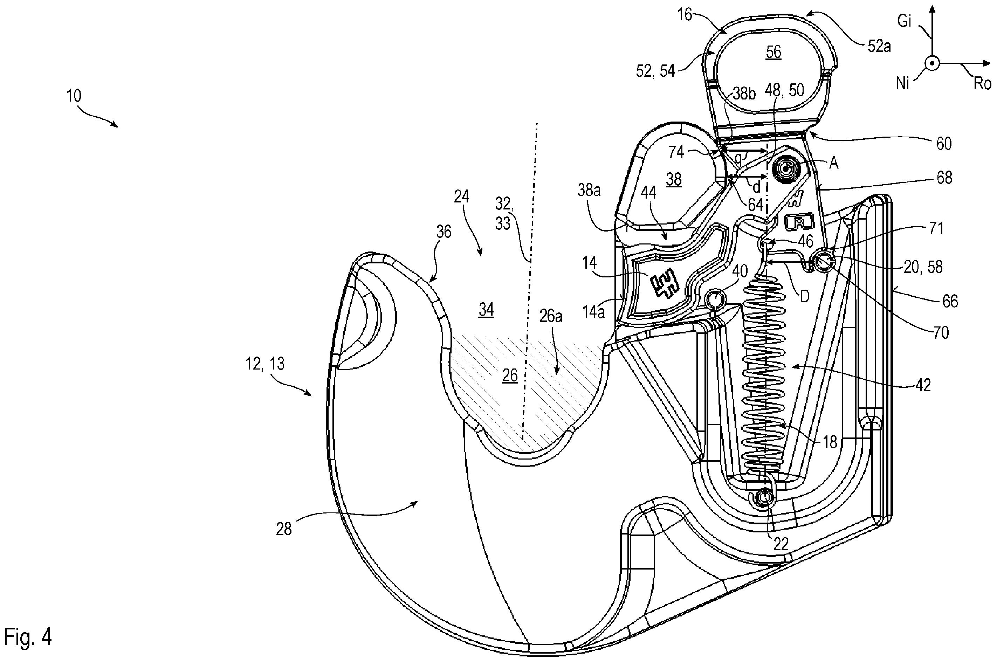

Um nun den Schnellkupplungshaken 10 ausgehend von dem in Figur 1 gezeigten Betriebszustand in den in Figur 4 gezeigten Rüstzustand zu verbringen, in welchem sich der Sicherungsriegel 14 in der Freigabestellung und das Betätigungsbauteil 16 in der Rüststellung befinden, zieht eine Bedienperson nach Durchgreifen der Ringöse 52 an dieser in Richtung des Pfeils der Zugkraft Z und beginnt, das Betätigungsbauteil aus der Ausnehmung 42 des Hakenkörpers 12 herauszuziehen. Ist die Ringöse 52, wie vorliegend, größer als der Durchmesser eines sie durchgreifenden Fingers, ist es vernünftig anzunehmen, dass die Bedienperson an jenem Abschnitt 52a der Ringöse 52 angreifen wird, welcher im Wesentlichen orthogonal zur gewünschten Zugrichtung verläuft, also vorliegend orthogonal zum Pfeil der Zugkraft Z.

Die Orte der beiden Federlager 22 und 46 der Vorspannfeder 18 sind dabei so gewählt, dass die den Verlauf der Kraftwirkung bestimmende virtuelle Verbindungsgerade 48 zum einen möglichst nah an der zweiten hakenkörperseitigen Anlageformation 64 vorbei verläuft und zum anderen von der gewünschten Richtung der Zugkraft Z nicht allzu sehr abweicht.

Die jeweilige Richtung der Zugkraft Z hängt von der jeweils angreifenden Bedienperson ab und ist der Vorrichtung nicht ohne weiteres anzusehen. Aus ergonomischen Gründen unterscheidet sich eine vorteilhafte Richtung der Zugkraft Z im Bezugszustand nicht wesentlich von der Orientierungsrichtung der Maulmittelebene 33 bzw. der Einführtrajektorie 32, sodass die virtuelle Verbindungsgerade 48 mit der Maulmittelebene 33 bzw. Einführtrajektorie 32 zumindest in der Seitenansicht von Figur 1 einen Winkel einschließt, welcher bevorzugt nicht größer als 15° ist.

Auf der vom Hakenmaul 24 abgewandten Seite des Hakenkörpers 12 weist dieser eine Anschlussfläche 66 auf, welche in der Regel wenigstens in der Höhenrichtung des Schnellkupplungshakens 10 ungekrümmt ist. Vorzugsweise ist die Anschlussfläche 66 eine Anschlussebene 66. Mit dieser Anschlussfläche 66 wird der Schnellkupplungshaken 10 zur Befestigung an einen fahrzeugseitigen Träger mit diesem verbunden, etwa stumpf an dessen Längsende angeschweißt.

Mit der Anschlussfläche 66 schließt die virtuelle Verbindungsgerade 48 aus den oben genannten Gründen im Bezugszustand bevorzugt einen Winkel von nicht größer als 10° ein.

Alles vorliegend zur virtuellen Verbindungsgerade 48 Gesagte gilt auch für die oben definierte die virtuelle Verbindungsgerade 48 enthaltende Ebene 50 als einer Bezugsebene 50.

Wie aus der Darstellung von Figur 1 deutlich wird, ist im Bezugszustand der Abstand D der virtuellen Verbindungsgerade 48 von der ersten hakenkörperseitigen Anlageformation 58 wesentlich größer als der Abstand d der virtuellen Verbindungsgerade 48 von der zweiten hakenkörperseitigen Anlageformation 64. Im dargestellten Ausführungsbeispiel ist der Abstand D mehr als zwölfmal größer als der Abstand d. Durch diese Anordnung liegt ein Großteil des Volumens bzw. der Masse des Betätigungsbauteils 16, im dargestellten Ausführungsbeispiel etwa 90 % des Volumens und der Masse des Betätigungsbauteils 16, auf einer Seite der virtuellen Verbindungsgerade 48 bzw. der Ebene 50, auf welcher auch die Zugkraft Z durch die Bedienperson angreift. Dies ist auch die Seite, auf welcher die im Rüstzustand von Figur 4 das Betätigungsbauteil 16 in dessen Rüststellung sichernde Rastformation 20 gelegen ist.

Die virtuelle Verbindungsgerade 48 bzw. die Ebene 50 verläuft außerhalb der Durchgriffsfläche 56 der Ringöse 52, was das durch die Zugkraft Z und die Vorspannkraft V bewirkte Neigemoment um eine zur Zeichenebene der Figur 1 orthogonale Neigeachse noch verstärkt.

Durch diese Gestaltung bewirken die Zugkraft Z und die Vorspannkraft V ein auf das Betätigungsbauteil 16 ausgeübtes Neigemoment, welches das Betätigungsbauteil 16 in Figur 1 im Gegenuhrzeigersinn zu neigen drängt.

Dieses Neigemoment sorgt dafür, dass auch im Falle einer gedankenlos und ohne definierte Zugrichtung an der Ringöse 52 mit der Zugkraft Z ziehenden Bedienperson eine Gleitfläche 68 am Außenumfang des Betätigungsbauteils 16 nach dem Verlassen der Betriebsstellung an der Rastformation 20 bzw. an der ersten hakenkörperseitigen Anlageformation 58 anliegt. Durch ein Entlanggleiten der Gleitfläche 68 an der ersten hakenkörperseitigen Anlageformation 58 bzw. Rastformation 20 wird die Bewegung des Betätigungsbauteils 16 beim Herausziehen aus der Ausnehmung 42 geführt.

Die sich im dargestellten Ausführungsbeispiel über die Dicke des Betätigungsbauteils 16 erstreckende Gleitfläche 68 verläuft von der ersten Anlagegegenformation 60 bis zu einer betätigungsbauteilseitigen Rastgegenformation 70, welche in der Rüststellung des Betätigungsbauteils 16 in Anlageeingriff mit der Rastformation 20 steht. Die betätigungsbauteilseitige Rastgegenformation 70 ist negativ-teilzylindrisch gestaltet, sodass sie flächig an der zylindrischen Rastformation schmiegend anliegen kann.

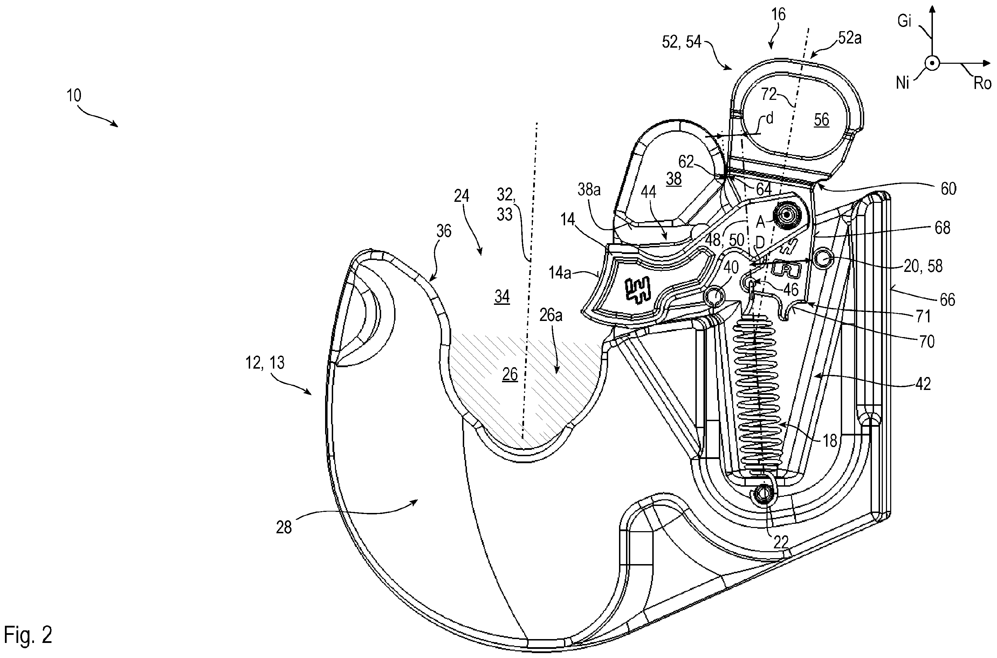

Figur 2 zeigt den Schnellkupplungshaken 10 von Figur 1 in einer Übergangsphase, nachdem das Betätigungsbauteil 16 manuell ein Stück weit aus seiner in Figur 1 gezeigten Betriebsstellung aus der Ausnehmung 42 herausgezogen wurde.

Die Vorspannfeder 18 ist aufgrund des Auszugs des Betätigungsbauteils 16 aus der Ausnehmung 42 stärker gespannt als in Figur 1, wodurch die von der Vorspannfeder 18 auf das Betätigungsbauteil 16 ausgeübte Vorspannkraft betragsmäßig größer geworden ist. Im Sinne eines Kräftegleichgewichts ist daher auch die von der Bedienperson aufzubringende Zugkraft größer geworden. In Figur 2 sind weder Zugkraft noch Vorspannkraft eingetragen, jedoch sind ihre Wirkungslinien dargestellt, einmal in der bekannten Gestalt der virtuellen Verbindungsgerade 48 und ein weiteres Mal durch die im dargestellten Ausführungsbeispiel ebenfalls zur Zeichenebene von Figur 1 parallele Wirkungslinie 72.

Das Betätigungsbauteil 16 liegt aufgrund des durch Zugkraft und Vorspannkraft bewirkten Neigemoments mit seiner Gleitfläche 68 an der Rastformation 20 an. Auf der dem Hakenmaul 24 zugewandten Randseite liegt das Betätigungsbauteil 16 immer noch an der zweiten hakenkörperseitigen Anlageformation 64 an. Die zweite betätigungsbauteilseitige Anlagegegenformation 62 stellt im vorliegenden Ausführungsbeispiel daher, wie die Gleitfläche 68, eine als Gleitfläche nutzbare, in Dickenrichtung des Betätigungsbauteils 16 verlaufende Randfläche dar.

Das hakenkörperseitige Federlager 22 ist naturgemäß bezüglich des Hakenkörpers 12 ortsfest. Eine Lageveränderung der beiden Federlager 22 und 46 geht daher ausschließlich vom betätigungsbauteilseitigen Federlager 46 aus. Wie an der Lage der virtuellen Verbindungsgerade 48 in Figur 2 zu erkennen ist, hat sich die virtuelle Verbindungsgerade 48 durch den Auszug des Betätigungsbauteils 16 von dessen Betriebsstellung in die in Figur 2 gezeigte Stellung etwas von der zweiten hakenkörperseitigen Anlageformation 64 entfernt und etwas an die Rastformation 20 angenähert. Dennoch liegt die virtuelle Verbindungsgerade 48 nach wie vor näher an der zweiten hakenkörperseitigen Anlageformation 64. Weiterhin liegt mehr als 50 % des Volumens bzw. der Masse, vorliegend etwa 80 % des Volumens und der Masse, des Betätigungsbauteils 16 auf derselben Seite der virtuellen Verbindungsgerade 48, auf welcher auch die Rastformation 20 liegt, d. h. auf der vom Hakenmaul 24 abgewandten Seite der virtuellen Verbindungsgerade 48. Der Abstand D der virtuellen Verbindungsgerade 48 von der Rastformation 20 beträgt nun etwa das Dreifache des Abstands d der virtuellen Verbindungsgerade 48 von der zweiten hakenkörperseitigen Anlageformation 64.

Auch der Durchgriffsbereich 56 der Ringöse 52 liegt nach wie vor zu wenigstens 75 %, hier sogar zu 100 % auf derselben Seite der virtuellen Verbindungsgerade 48 wie die Rastformation 20.

Der Sicherungsriegel 14 ist durch das Ausziehen des Betätigungsbauteils 16 weiter in den Kanal 44 zurückgezogen und gibt einen in Figur 1 noch belegten Abschnitt des Öffnungsbereichs 34 frei.

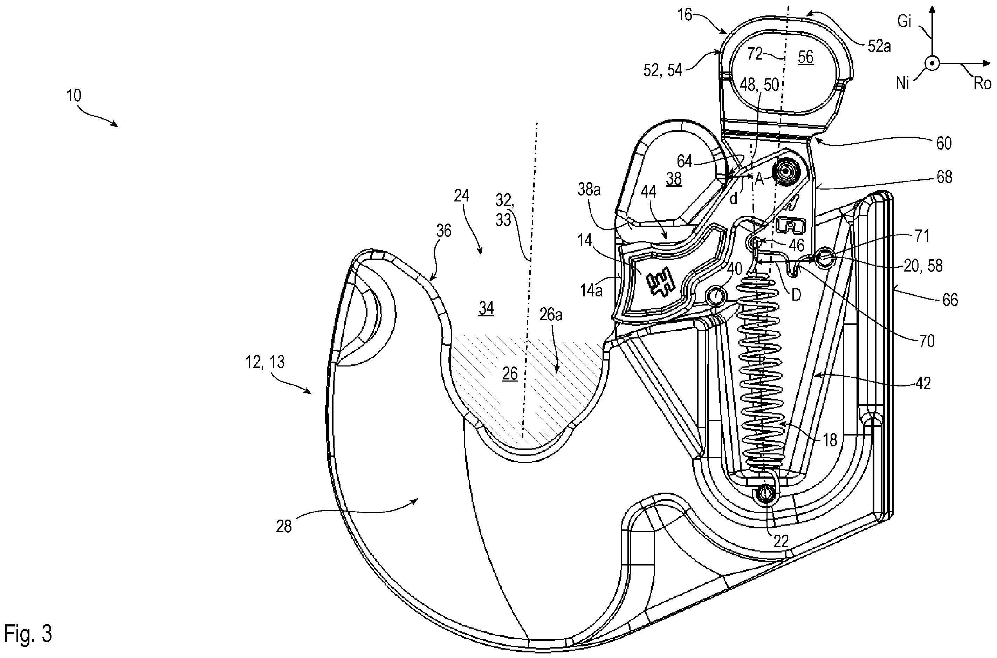

Um das Betätigungsbauteil 16 in die Rüststellung zu bewegen, muss dieses noch weiter gegen die Vorspannwirkung der Vorspannfeder 18 aus der Ausnehmung 42 herausgezogen werden. Einen weiter ausgezogenen Zustand zeigt Figur 3.

Figur 3 zeigt einen Auszugszustand des Betätigungsbauteils 16 aus der Ausnehmung 42 kurz bevor die betätigungsbauteilseitige Rastgegenformation 70 an der hakenkörperseitigen Rastformation 20 zur Anlage kommt. Das Betätigungsbauteil 16 ist soweit aus der Ausnehmung 42 herausgezogen, dass nun eine die Gleitfläche 68 von der betätigungsbauteilseitigen Rastgegenformation 70 trennende Grenzkante 71 sich in Anlage an der Rastformation 20 befindet.

Die virtuelle Verbindungsgerade 48 hat sich durch den noch stärkeren Auszug des Betätigungsbauteils 16 aus der Ausnehmung 42 noch etwas weiter von der zweiten hakenkörperseitigen Anlageformation 64 weg hin zur Rastformation 20 bewegt, wobei sie jedoch immer noch deutlich näher bei der zweiten hakenkörperseitigen Anlageformation 64 liegt. Der Abstand D der virtuellen Verbindungsgerade 48 von der Rastformation beträgt in dem in Figur 3 gezeigten Zustand etwas mehr als das Doppelte des Abstands d der virtuellen Verbindungsgerade 48 von der zweiten hakenkörperseitigen Anlageformation 64.

Nach wie vor sorgen die durch die Vorspannfeder 18 auf das Betätigungsbauteil 16 ausgeübte Vorspannkraft und die durch Fingerangriff am Abschnitt 52a der Ringöse 52 auf das Betätigungsbauteil 16 ausgeübte Zugkraft für ein auf das Betätigungsbauteil 16 bei Betrachtung der Figur 3 im Gegenuhrzeigersinn wirkendes Neigemoment, welches die Grenzkante 71 zwischen der Gleitfläche 68 und der Rastgegenformation 70 gegen die Rastformation 20 drückt. Auf der dem Hakenmaul 24 zugewandten Seite des Betätigungsbauteils 16 findet kein Anlageeingriff mit dem Hakenkörper 12 mehr statt.

Immer noch befindet sich der Durchgriffsbereich 56 der Ringöse 52 zu wenigstens 75 %, hier sogar zu wenigstens 80 % auf derselben Seite der virtuellen Verbindungsgerade 48 wie die Rastformation 20.

Ein geringfügiges weiteres Herausziehen des Betätigungsbauteils 16 führt aufgrund der Bewegung der Grenzkante 71 relativ zur Rastformation 20 und aufgrund des beschriebenen Neigemoments zu einer Neigebewegung des Betätigungsbauteils 16 im Gegenuhrzeigersinn, welche nur durch die Anlage der Rastgegenformation 70 an der Rastformation 20 beendet wird. Da das Betätigungsbauteil 16 um die Anlenkachse A schwenkbar mit dem Sicherungsriegel 14 verbunden ist und da weiter der Sicherungsriegel 14 an zwei mit Abstand voneinander angeordneten Stellen an einer Oberfläche des Hakenkörpers 12 anliegt, kann die Anlenkachse A eine durch das beschriebene Neigemoment induzierte Neigebewegung des Betätigungsbauteils 16 im Gegenuhrzeigersinn führen. Diese Neigebewegung würde jedoch auch dann in der beschriebenen Weise stattfinden, wenn der Sicherungsriegel 14 nicht vorhanden wäre. Das Betätigungsbauteil 16 wird daher unabhängig davon, wie die Bedienperson das Betätigungsbauteil 16 ausgehend von Figur 3 weiter aus der Ausnehmung 42 herauszieht, mit seiner Rastgegenformation 70 an der Rastformation 20 zur Anlage kommen.

Die Grenzkante 71 muss keine scharfe Kante sein, sondern kann ein die Gleitfläche 68 von der Rastgegenformation 70 trennender Grenzbereich sein.

Der Sicherungsriegel 14 ist nahezu vollständig in den Kanal 44 zurückgezogen.

In Figur 4 ist schließlich der Rüstzustand des Schnellkupplungshakens 10 dargestellt, in welchem sich das Betätigungsbauteil 16 in seiner Rüststellung befindet. Die Rastgegenformation 70 liegt schmiegend an der Rastformation 20 an und durch die Vorspannkraft der Vorspannfeder 18 wird das Betätigungsbauteil 16 auf seiner dem Hakenmaul 24 zugewandten Seite um die Rastformation 20 zur Anlage an den Hakenkörperabschnitt 38 gedrängt. Genauer liegt eine auf der dem Hakenmaul 24 zugewandten Seite des Betätigungsbauteils 16 mit Abstand von der Rastgegenformation 70 ausgebildete Rüst-Anlagegegenformation 74 des Betätigungsbauteils 16 an einer durch einen Flächenabschnitt des Hakenkörperabschnitt 38 gebildeten hakenkörperseitigen Rüst-Anlageformation 38b an. Wiederum befindet sich das Betätigungsbauteil 16 durch die Anlageeingriffe zwischen Rastgegenformation 70 und Rastformation 20 einerseits sowie zwischen der Rüst-Anlagegegenformation 74 und der Rüst-Anlageformation 38b andererseits und unter der Wirkung der Vorspannfeder 18 in einer stabilen Position, welche nur durch einen äußeren Kraftangriff änderbar ist.

Der Sicherungsriegel 14 ist nun vollständig in den Kanal 44 zurückgezogen und der Öffnungsbereich 34 steht in seiner vollständigen lichten Weite für eine Einführung oder eine Entnahme eines Gegenkupplungsbauteils in den Aufnahmebereich 26 bzw. aus dem Aufnahmebereich 26 zur Verfügung.

Die virtuelle Verbindungsgerade 48 hat sich verglichen mit Figur 3 noch weiter von der zweiten hakenkörperseitigen Anlageformation 64 entfernt und der Rastformation 20 angenähert. Bevorzugt nähert sich die virtuelle Verbindungsgerade 48 während des gesamten Bewegungsvorgangs einer Bewegung des Betätigungsbauteils 16 aus seiner Betriebsstellung in die in Figur 4 gezeigte Rüststellung nie näher an die Rastformation 20 an, als dass der Abstand d größer würde als das Doppelte des Abstands D.

Der Abstand D der virtuellen Verbindungsgerade 48 von der Rastformation 20 ist außerdem etwa gleich groß wie oder geringfügig größer als ein Abstand q der virtuellen Verbindungsgerade 48 von der hakenkörperseitigen Rüst-Anlageformation 38b. Der Abstand q ist bei der gegebenen Konstruktion des Ausführungsbeispiels geringfügig größer als der Abstand d der virtuellen Verbindungsgerade 48 von der zweiten hakenkörperseitigen Anlageformation 64. Bevorzugt wird auch der Abstand q nicht größer als das Doppelte, vorzugsweise als das 1,25-Fache des Abstands D. Dadurch ist durch die Vorspannfeder 18 ein ausreichendes auf das Betätigungsbauteil 16 ausgeübtes Neigemoment um die Rastformation 20 gewahrt.

Die virtuelle Anlenkachse A befindet sich in allen in den Figuren 1 bis 4 gezeigten Zuständen des Schnellkupplungshakens 10 auf derselben Seite der virtuellen Verbindungsgerade 48 wie die hakenkörperseitige Rastformation 20.

In die in Figur 4 gezeigte Rüststellung gelangt das Betätigungsbauteil 16 nicht durch Verdrängung des Sicherungsriegels 14 aus der in Figur 1 gezeigten Sicherungsstellung mittels eines in das Hakenmaul 24 bewegten Gegenkupplungsbauteils 30, sondern nur durch manuelle oder aktuatorische Betätigung des Betätigungsbauteils 16. Wird dagegen der Sicherungsriegel 14 mittels eines in das Hakenmaul 24 bewegten Gegenkupplungsbauteils 30 aus seiner Sicherungsstellung verdrängt, ist diese Verdrängung nur vorübergehend. Sobald das in das Hakenmaul 24 einfahrende Gegenkupplungsbauteil 30 den verdrängten Sicherungsriegel 14 passiert hat, wird dieser durch die Vorspannfeder 18 zurück in seine Sicherungsstellung bewegt.

Mittels einer Bewegung der Kraftangriffsformation 54 in Figur 4 in Richtung vom Hakenmaul 24 bzw. von der Maulmittelebene 33 weg und zur Anschlussfläche 66 hin kann der Schnellkupplungshaken 10 zurück in den Betriebs- bzw. Bezugszustand von Figur 1 versetzt werden. Aufgrund der in Figur 4 gezeigten körperlichen Bewegungseinschränkung des Sicherungsriegels 14 durch den Hakenkörper 12 bleibt bei der genannten Kraftbelastung des Betätigungsbauteils 16 die Anlenkachse A im Wesentlichen in der in Figur 4 gezeigten Stellung. Das Betätigungsbauteil 16 schwenkt - bei Betrachtung der Figur 4 - im Uhrzeigersinn um die Anlenkachse A, wodurch die Rastgegenformation 70 außer Eingriff mit der Rastformation 20 gelangt. Die Vorspannfeder 18 zwingt das Betätigungsbauteil dann in seine Betriebsstellung und folglich den Sicherungsriegel 14 in dessen Sicherungsstellung.

## Patentansprüche

1. Schnellkupplungshaken (10) für landwirtschaftliche Fahrzeuge, umfassend
i. einen Hakenkörper (12) mit einem Hakenmaul (24), wobei das Hakenmaul (24) einen durch einen Öffnungsbereich (34) hindurch erreichbaren Aufnahmebereich (26) aufweist,
ii. einen Sicherungsriegel (14), welcher am Hakenkörper (12) aufgenommen ist und welcher relativ zum Hakenkörper (12) verlagerbar ist zwischen einer Sicherungsstellung und einer Freigabestellung, wobei der Sicherungsriegel (14) in der Sicherungsstellung weiter in den Öffnungsbereich hineinragt als in der Freigabestellung,
iii. ein Betätigungsbauteil (16), welches am Hakenkörper (12) aufgenommen ist und welches relativ zum Hakenkörper (12) beweglich ist zwischen einer Betriebsstellung und einer Rüststellung, wobei der Sicherungsriegel (14) und das Betätigungsbauteil (16) derart zur gemeinsamen Bewegung miteinander gekoppelt sind, dass dann, wenn sich das Betätigungsbauteil (16) in seiner Rüststellung befindet, sich der Sicherungsriegel (14) in seiner Freigabestellung befindet, und dass dann, wenn sich das Betätigungsbauteil (16) in seiner Betriebsstellung befindet, sich der Sicherungsriegel (14) in seiner Sicherungsstellung befindet,
iv. eine Vorspannfeder (18), welche sich zwischen einem hakenkörperseitigen Federlager (22) und einem betätigungsbauteilseitigen Federlager (46) erstreckt und welche das Betätigungsbauteil (16) zu seiner Betriebsstellung hin vorspannt,
v. eine erste hakenkörperseitige Anlageformation (58) auf einer ersten Seite des Betätigungsbauteils (16), und
vi. eine zweite hakenkörperseitige Anlageformation (64) auf einer der ersten Seite entgegensetzten zweiten Seite des Betätigungsbauteils (16),
wobei das Betätigungsbauteil (16) in seiner Betriebsstellung an der ersten und an der zweiten hakenkörperseitigen Anlageformation (64) anliegt,
wobei das Betätigungsbauteil (16) eine Kraftangriffsformation (54) aufweist, welche dazu ausgebildet ist, um durch Kraftangriff daran das Betätigungsbauteil (16) ausgehend von der Betriebsstellung gegen die Wirkung der Vorspannfeder (18) in Richtung der Rüststellung zu bewegen,
**dadurch gekennzeichnet, dass** in einem Bezugszustand des Schnellkupplungshakens (10), in welchem sich das Betätigungsbauteil (16) in seiner Betriebsstellung befindet, eine sowohl das hakenkörperseitige Federlager (22) als auch das betätigungsbauteilseitige Federlager (46) durchsetzende virtuelle Verbindungsgerade (48) einen wenigstens doppelt so großen Abstand (D) von der ersten hakenkörperseitigen Anlageformation (58) aufweist wie von der zweiten hakenkörperseitigen Anlageformation (64).

2. Schnellkupplungshaken (10) nach Anspruch 1,
**dadurch gekennzeichnet, dass** die virtuelle Verbindungsgerade (48) im Bezugszustand des Schnellkupplungshakens (10) zwischen der ersten und der zweiten hakenkörperseitige Anlageformation (58, 64) verläuft.

3. Schnellkupplungshaken (10) nach Anspruch 1 oder 2,
**dadurch gekennzeichnet, dass** der Schnellkupplungshaken (10) eine hakenkörperseitige Rastformation (20) aufweist, mit welcher eine betätigungsbauteilseitige Rastgegenformation (70) des Betätigungsbauteils (16) in einem Rüstzustand des Schnellkupplungshakens (10), in welchem sich das Betätigungsbauteil (16) in der Rüststellung befindet, in Eingriff ist, um das Betätigungsbauteil (16) gegen die Wirkung der Vorspannfeder (18) in der Rüststellung zu halten.

4. Schnellkupplungshaken (10) nach Anspruch 3,
**dadurch gekennzeichnet, dass** die hakenkörperseitige Rastformation (20) im Bezugszustand des Schnellkupplungshakens (10) auf derselben Seite des Betätigungsbauteils (16) gelegen ist wie die erste hakenkörperseitige Anlageformation (58).

5. Schnellkupplungshaken (10) nach Anspruch 3 oder 4,
**dadurch gekennzeichnet, dass** die hakenkörperseitige Rastformation (20) die erste hakenkörperseitige Anlageformation (58) ist.

6. Schnellkupplungshaken (10) nach einem der Ansprüche 3 bis 5,
**dadurch gekennzeichnet, dass** in dem Rüstzustand des Schnellkupplungshakens (10) eine mit Abstand von der betätigungsbauteilseitigen Rastgegenformation (70) gelegene Rüst-Anlagegegenformation (74) des Betätigungsbauteils (16) an einer hakenkörperseitigen Rüst-Anlageformation (38b) anliegt, wobei in dem Rüstzustand der Abstand der virtuellen Verbindungsgerade (48) vom hakenkörperseitigen Rüst-Anlageformation (38b) höchstens das Doppelte des Abstands der virtuellen Verbindungsgerade (48) von der Rastformation (20) beträgt.

7. Schnellkupplungshaken (10) nach einem der vorhergehenden Ansprüche,
**dadurch gekennzeichnet, dass** im Bezugszustand die erste hakenkörperseitige Anlageformation (58) auf der vom Hakenmaul (24) abgewandten Seite des Betätigungsbauteils (16) gelegen ist und die zweite hakenkörperseitige Anlageformation (64) auf der dem Hakenmaul (24) zugewandten Seite des Betätigungsbauteils (16) gelegen ist.

8. Schnellkupplungshaken (10) nach einem der vorhergehenden Ansprüche,
**dadurch gekennzeichnet, dass** die virtuelle Verbindungsgerade (48) im Bezugszustand oder/und im Rüstzustand
a) mit einer Maulmittelebene (33), welche orthogonal zu einer vom Hakenmaul (24) umgebenen Querschnittsfläche (26a) des Aufnahmebereichs (26) orientiert ist und mittig sowohl durch den Öffnungsbereich (34) als auch durch den Aufnahmebereich (26) hindurch verläuft, oder/und
b) mit einer virtuellen Einführtrajektorie (32) eines mit dem Schnellkupplungshaken (10) zu kuppelnden Gegenkupplungsbauteils (30) in den Aufnahmebereich (26) hinein
einen Winkel von nicht mehr als 15° einschließt.

9. Schnellkupplungshaken (10) nach einem der vorhergehenden Ansprüche,
**dadurch gekennzeichnet, dass** der Hakenkörper (12) eine Anschlussfläche (66) zum Anschluss an einen fahrzeugseitigen Träger aufweist, wobei die virtuelle Verbindungsgerade (48) im Bezugszustand oder/und im Rüstzustand mit der Anschlussfläche (66) einen Winkel von nicht mehr als 10° einschließt.

10. Schnellkupplungshaken (10) nach einem der vorhergehenden Ansprüche, unter Einbeziehung des Anspruchs 3,
**dadurch gekennzeichnet, dass** das Betätigungsbauteil (16) eine Gleitfläche (68) aufweist, welche von einer ersten Anlagegegenformation (60), mit welcher das Betätigungsbauteil (16) im Bezugszustand an der ersten hakenkörperseitigen Anlageformation (58) anliegt, bis zur betätigungsbauteilseitigen Rastgegenformation (70) verläuft.

11. Schnellkupplungshaken (10) nach einem der vorhergehenden Ansprüche,
**dadurch gekennzeichnet, dass** der Sicherungsriegel (14) um eine virtuelle Anlenkachse (A) schwenkbar am Betätigungsbauteil (16) angelenkt ist.

12. Schnellkupplungshaken (10) nach Anspruch 11, unter Einbeziehung des Anspruchs 3,
**dadurch gekennzeichnet, dass** in dem Rüstzustand die virtuelle Anlenkachse (A) bezüglich einer die virtuelle Verbindungsgerade (48) enthaltenden und orthogonal zu einer vom Hakenmaul (24) umgebenen Querschnittsfläche (26a) des Aufnahmebereichs (26) orientierten Bezugsebene (50) auf derselben Seite gelegen ist wie die hakenkörperseitige Rastformation (20) oder/und die erste hakenkörperseitige Anlageformation (58).

13. Schnellkupplungshaken (10) nach einem der vorhergehenden Ansprüche,
**dadurch gekennzeichnet, dass** die Kraftangriffsformation (54) eine Hintergriffsformation (52, 56) für einen manuellen Fingerangriff umfasst oder/und dass die Kraftangriffsformation eine Kopplungsformation zur Kopplung des Betätigungsbauteils (16) mit einem Ausgabeglied eines Aktuators umfasst.

14. Schnellkupplungshaken (10) nach einem der vorhergehenden Ansprüche, unter Einbeziehung des Anspruchs 3,
**dadurch gekennzeichnet, dass** im Bezugszustand wenigstens 75 % des Betätigungsbauteils (16) bezüglich einer die virtuelle Verbindungsgerade (48) enthaltenden und orthogonal zu einer vom Hakenmaul (24) umgebenen Querschnittsfläche (26a) des Aufnahmebereichs (26) orientierten Bezugsebene (50) auf derselben Seite gelegen sind wie die hakenkörperseitige Rastformation (20) oder/und die erste hakenkörperseitige Anlageformation (58).

15. Schnellkupplungshaken (10) nach einem der vorhergehenden Ansprüche,
**dadurch gekennzeichnet, dass** sie einen Aktuator aufweist, um das Betätigungsbauteil (16) von der Betriebsstellung in die Rüststellung zu bewegen.

## Claims

1. Quick-coupling hook (10) for agricultural vehicles, comprising
i. A hook body (12) with a hook mouth (24), where the hook mouth (24) exhibits an accommodating region (26) accessible through an opening region (34),
ii. A securing lock (14) which is accommodated at the hook body (12) and which is displaceable relative to the hook body (12) between a securing position and a releasing position, where in the securing position the securing lock (14) projects further into the opening region than in the releasing position,
iii. An actuating component (16) which is accommodated at the hook body (12) and which is moveable relative to the hook body (12) between an operating position and a setting-up position, where the securing lock (14) and the actuating component (16) are coupled with one another for common movement in such a way that when the actuating component (16) is in its setting-up position, the securing lock (14) is in its releasing position, and that when the actuating component (16) is in its operating position, the securing lock (14) is in its securing position,
iv. A pre-tensioning spring (18) which extends between a hook body-side spring bearing (22) and an actuating component-side spring bearing (46) and which pre-tensions the actuating component (16) towards its operating position,
v. A first hook body-side abutment formation (58) on a first side of the actuating component (16), and
vi. A second hook body-side abutment formation (64) on a second side of the actuating component (16) which is opposite to the first side,
Where the actuating component (16) abuts in its operating position against the first and against the second hook body-side abutment formation (64),
Where the actuating component (16) exhibits a force application formation (54) which is configured, through force application thereon, to move the actuating component (16) starting from the operating position against the effect of the pre-tensioning spring (18) in the direction of the setting-up position,
**Characterized in that** in a reference state of the quick-coupling hook (10) in which the actuating component (16) is in its operating position, a virtual straight connecting line (48) passing through both the hook body-side spring bearing (22) and the actuating component-side spring bearing (46) exhibits at least double the distance (D) from the first hook body-side abutment formation (58) as it does from the second hook body-side abutment formation (64).

2. Quick-coupling hook (10) according to Claim 1,
**Characterized in that** in the reference state of the quick-coupling hook (10) the virtual straight connecting line (48) runs between the first and the second hook body-side abutment formation (58, 64).

3. Quick-coupling hook (10) according to Claim 1 or 2,
**Characterized in that** the quick-coupling hook (10) exhibits a hook body-side latching formation (20) with which an actuating component-side latching counter-formation (70) of the actuating component (16), in a setting-up state of the quick-coupling hook (10) in which the actuating component (16) is in the setting-up position, is engaged in order to hold the actuating component (16) against the effect of the pre-tensioning spring (18) in the setting-up position.

4. Quick-coupling hook (10) according to Claim 3,
**Characterized in that** in the reference state of the quick-coupling hook (10) the hook body-side latching formation (20) lies on the same side of the actuating component (16) as the first hook body-side abutment formation (58).

5. Quick-coupling hook (10) according to Claim 3 or 4,
**Characterized in that** the hook body-side latching formation (20) is the first hook body-side abutment formation (58).

6. Quick-coupling hook (10) according to one of the Claims 3 to 5,
**Characterized in that** in the setting-up state of the quick-coupling hook (10) a setting-up abutment counter-formation (74) of the actuating component (16) situated at a distance from the actuating component-side latching counter-formation (70) abuts against a hook body-side setting-up abutment formation (38b), where in the setting-up state the distance of the virtual straight connecting line (48) from the hook body-side setting-up abutment formation (38b) equals at most double the distance of the virtual straight connecting line (48) from the latching formation (20).

7. Quick-coupling hook (10) according to one of the preceding Claims,
**Characterized in that** in the reference state the first hook body-side abutment formation (58) is situated on the side of the actuating component (16) facing away from the hook mouth (24) and the second hook body-side abutment formation (64) is situated on the side of the actuating component (16) facing towards the hook mouth (24).

8. Quick-coupling hook (10) according to one of the preceding Claims,
**Characterized in that** in the reference state and/or in the setting-up state the virtual straight connecting line (48) encloses an angle not exceeding 15°
a) With a mouth center plane (33) which is oriented orthogonally to a cross-sectional area (26a) of the accommodating region (26) surrounded by the hook mouth (24) and running centrally both through the opening region (34) and through the accommodating region (26), and/or
b) With a virtual insertion trajectory (32) of a counter-coupling component (30) to be coupled with the quick-coupling hook (10) into the accommodating region (26).

9. Quick-coupling hook (10) according to one of the preceding Claims,
**Characterized in that** the hook body (12) exhibits a connection surface (66) for connecting to a vehicle-side carrier, where in the reference state and/or in the setting-up state the virtual straight connecting line (48) encloses with the connection surface (66) an angle not exceeding 10°.

10. Quick-coupling hook (10) according to one of the preceding Claims, in consideration of Claim 3,
**Characterized in that** the actuating component (16) exhibits a sliding surface (68) which runs from a first abutment counter-formation (60) with which in the reference state the actuating component (16) abuts against the first hook body-side abutment formation (58) up to the actuating component-side latching counter-formation (70).

11. Quick-coupling hook (10) according to one of the preceding Claims,
**Characterized in that** the securing lock (14) is articulated pivotably about a virtual linkage axis (A) at the actuating component (16).

12. Quick-coupling hook (10) according to Claim 11, in consideration of Claim 3,
**Characterized in that** in the setting-up state the virtual linkage axis (A) lies on the same side as the hook body-side latching formation (20) and/or the first hook body-side abutment formation (58) with respect to a reference plane (50) containing the virtual straight connecting line (48) and oriented orthogonally to a cross-sectional area (26a) of the accommodating region (26) surrounded by the hook mouth (24).

13. Quick-coupling hook (10) according to one of the preceding Claims,
**Characterized in that** the force application formation (54) comprises a rear grip formation (52, 56) for a manual finger grip and/or that the force application formation comprises a coupling formation for coupling the actuating component (16) with an output element of an actuator.

14. Quick-coupling hook (10) according to one of the preceding Claims, in consideration of Claim 3,
**Characterized in that** in the reference state at least 75% of the actuating component (16) lie on the same side with respect to a reference plane (50) containing the virtual straight connecting line (48) and oriented orthogonally to a cross-sectional area (26a) of the accommodating region (26) surrounded by the hook mouth (24) as the hook body-side latching formation (20) and/or the first hook body-side abutment formation (58).

15. Quick-coupling hook (10) according to one of the preceding Claims,
**Characterized in that** it exhibits an actuator in order to move the actuating component (16) from the operating position into the setting-up position.

## Revendications

1. Crochet d'accouplement rapide (10) pour véhicules agricoles, comprenant
i. un corps de crochet (12) avec une mâchoire de crochet (24), la mâchoire de crochet (24) présentant une zone de réception (26) accessible à travers une zone d'ouverture (34),
ii. un verrou de sécurité (14) qui est reçu sur le corps de crochet (12) et qui est déplaçable par rapport au corps de crochet (12) entre une position de verrouillage et une position de déverrouillage, le verrou de sécurité (14) s'étendant plus loin dans la zone d'ouverture dans la position de verrouillage que dans la position de déverrouillage,
iii. un élément d'actionnement (16) qui est reçu sur le corps de crochet (12) et qui est mobile par rapport au corps de crochet (12) entre une position de fonctionnement et une position de préparation, le verrou de sécurité (14) et l'élément d'actionnement (16) étant couplés l'un à l'autre pour un mouvement commun de telle sorte que, lorsque l'élément d'actionnement (16) se trouve dans sa position de préparation, le verrou de sécurité (14) se trouve dans sa position de déverrouillage, et que lorsque l'élément d'actionnement (16) se trouve dans sa position de fonctionnement, le verrou de sécurité (14) se trouve dans sa position de verrouillage,
iv. un ressort de précontrainte (18) qui s'étend entre un support de ressort (22) côté corps de crochet et un support de ressort (46) côté élément d'actionnement et qui précontraint l'élément d'actionnement (16) vers sa position de fonctionnement,
v. une première formation d'appui (58) côté corps de crochet sur un premier côté de l'élément d'actionnement (16), et
vi. une deuxième formation d'appui (64) côté corps de crochet sur un deuxième côté de l'élément d'actionnement (16) opposé au premier côté,
l'élément d'actionnement (16) appuyant dans sa position de fonctionnement contre les première et deuxième formations d'appui (64) côté corps de crochet,
l'élément d'actionnement (16) comportant une formation d'application de force (54) qui est conçue pour, par application d'une force sur celle-ci, déplacer l'élément d'actionnement (16) depuis la position de fonctionnement vers la position de préparation, contre l'action du ressort de précontrainte (18),
**caractérisé en ce que**, dans un état de référence du crochet d'accouplement rapide (10) dans lequel l'élément d'actionnement (16) se trouve dans sa position de fonctionnement, une droite de liaison virtuelle (48) traversant à la fois le support de ressort (22) côté corps de crochet et le support de ressort (46) côté élément d'actionnement présente une distance (D) au moins deux fois plus grande par rapport à la première formation d'appui (58) côté corps de crochet que par rapport à la deuxième formation d'appui (64) côté corps de crochet.

2. Crochet d'accouplement rapide (10) selon la revendication 1,
**caractérisé en ce que** la droite de liaison virtuelle (48) s'étend, dans l'état de référence du crochet d'accouplement rapide (10), entre la première et la deuxième formation d'appui (58, 64) côtés corps du crochet.

3. Crochet d'accouplement rapide (10) selon la revendication 1 ou 2,
**caractérisé en ce que** le crochet d'accouplement rapide (10) comporte une formation d'encliquetage (20) côté corps de crochet, avec laquelle une contre-formation d'encliquetage (70) côté élément d'actionnement de l'élément d'actionnement (16) s'engage, dans un état de préparation du crochet d'accouplement rapide (10), dans lequel l'élément d'actionnement (16) se trouve en position de montage, afin de maintenir l'élément d'actionnement (16) en position de montage contre l'action du ressort de précontrainte (18).

4. Crochet d'accouplement rapide (10) selon la revendication 3,
**caractérisé en ce que** la formation d'encliquetage (20) côté corps de crochet, dans l'état de référence du crochet d'accouplement rapide (10), est située du même côté de l'élément d'actionnement (16) que la première formation d'appui (58) côté corps de crochet.

5. Crochet d'accouplement rapide (10) selon la revendication 3 ou 4,
**caractérisé en ce que** la formation d'encliquetage (20) coté corps de crochet est la première formation d'appui (58) coté corps de crochet.

6. Crochet d'accouplement rapide (10) selon l'une des revendications 3 à 5,
**caractérisé en ce que**, dans l'état de préparation du crochet d'accouplement rapide (10), une contre-formation d'appui de préparation (74) de l'élément d'actionnement (16), côté corps de crochet, située à distance de la contre-formation d'encliquetage (70) côté élément d'actionnement, est en contact avec la formation d'appui de préparation (38b) coté corps de crochet, la distance entre la droite de liaison virtuelle (48) et la formation d'appui de préparation (38b) côté corps de crochet étant, à l'état de préparation, au plus égale au double de la distance entre la droite de liaison virtuelle (48) et la formation d'encliquetage (20).

7. Crochet à raccordement rapide (10) selon l'une des revendications précédentes,
**caractérisé en ce que**, à l'état de référence, la première formation d'appui (58) côté corps de crochet est située sur le côté de l'élément d'actionnement (16) opposé à la mâchoire de crochet (24) et la deuxième formation d'appui (64) côté corps de crochet est située sur le côté de l'élément d'actionnement (16) tourné vers la mâchoire de crochet (24).

8. Crochet d'accouplement rapide (10) selon l'une des revendications précédentes,
**caractérisé en ce que** la droite de liaison virtuelle (48), à l'état de référence et/ou à l'état de préparation, forme un angle ne dépassant pas 15°
a) avec un plan médian de mâchoire (33), qui est orienté orthogonalement à une surface de section transversale (26a) de la zone de réception (26) entourée par la mâchoire de crochet (24) et qui passe au centre à la fois par la zone d'ouverture (34) et par la zone de réception (26), et/ou
b) avec une trajectoire d'insertion virtuelle (32) d'un élément de contre-raccord (30) à raccorder au crochet d'accouplement rapide (10) qui s'étend dans la zone de réception (26).

9. Crochet d'accouplement rapide (10) selon l'une des revendications précédentes,
**caractérisé en ce que** le corps de crochet (12) comporte une surface de raccordement (66) destinée à être raccordée à un support côté véhicule, la droite de liaison virtuelle (48) formant, à l'état de référence et/ou à l'état d'armement, un angle ne dépassant pas 10° avec la surface de raccordement (66).

10. Crochet d'accouplement rapide (10) selon l'une des revendications précédentes, en incluant la revendication 3,
**caractérisé en ce que** l'élément d'actionnement (16) comporte une surface de glissement (68) qui s'étend depuis une première formation d'appui (60), avec laquelle l'élément d'actionnement (16) s'appuie dans l'état de référence contre la première formation d'appui (58) côté corps de crochet, jusqu'à la contre-formation d'encliquetage (70) côté élément d'actionnement.

11. Crochet d'accouplement rapide (10) selon l'une des revendications précédentes,
**caractérisé en ce que** le verrou de sécurité (14) est articulé sur l'élément d'actionnement (16) de manière à pouvoir pivoter autour d'un axe d'articulation virtuel (A).

12. Crochet d'accouplement rapide (10) selon la revendication 11, en combinaison avec la revendication 3,
**caractérisé en ce que**, à l'état de préparation, l'axe d'articulation virtuel (A) est situé, par rapport à un plan de référence (50) contenant la droite de liaison virtuelle (48) et orienté orthogonalement à une surface de section transversale (26a) de la zone de réception (26) entourée par la mâchoire du crochet (24), se trouve du même côté que la formation d'encliquetage (20) côté corps de crochet et/ou la première formation d'appui (58) côté corps de crochet.

13. Crochet d'accouplement rapide (10) selon l'une des revendications précédentes,
**caractérisé en ce que** la formation d'application de force (54) comprend une formation de prise arrière (52, 56) pour une prise manuelle par les doigts et/ou **en ce que** la formation d'application de force comprend une formation de couplage pour accoupler l'élément d'actionnement (16) à un organe de sortie d'un actionneur.

14. Crochet d'accouplement rapide (10) selon l'une des revendications précédentes, y compris la revendication 3,
**caractérisé en ce que**, à l'état de référence, au moins 75 % de l'élément d'actionnement (16) sont situés, par rapport à un plan de référence (50) contenant la droite de liaison virtuelle (48) et orienté orthogonalement à une surface de section transversale (26a) de la zone de réception (26) entourée par la mâchoire du crochet (24), sur le même côté que la formation d'encliquetage (20) côté corps de crochet et/ou la première formation d'appui (58) côté corps de crochet.

15. Crochet d'accouplement rapide (10) selon l'une des revendications précédentes,
**caractérisé en ce qu'**il comporte un actionneur pour déplacer l'élément d'actionnement (16) de la position de fonctionnement à la position de préparation.
